Europäisches Patentamt

European Patent Office

Office européen des brevets

(19)

(11) Veröffentlichungsnummer: **0 059 303**
B1

(12) **EUROPÄISCHE PATENTSCHRIFT**

(45) Veröffentlichungstag der Patentschrift:
18.12.85

(21) Anmeldenummer: 82100183.1

(22) Anmeldetag: 13.01.82

(51) Int. Cl.⁴: **F 02 M 37/00**, G 01 F 9/00

(54) Anordnung zum Kühlen des Kraftstoffs in einem Betriebssystem eines Dieselmotors mit einem geschlossenen Einspritzkreislauf.

(30) Priorität: 26.02.81 DE 3107141

(43) Veröffentlichungstag der Anmeldung:
08.09.82 Patentblatt 82/36

(45) Bekanntmachung des Hinweises auf die Patenterteilung:
18.12.85 Patentblatt 85/51

(84) Benannte Vertragsstaaten:
DE FR GB SE

(56) Entgegenhaltungen:
CH - A - 440 784
DE - U - 7 925 973
GB - A - 1 573 703
US - A - 3 672 394
US - A - 3 973 536

(73) Patentinhaber: Kienzle Apparate GmbH,
Heinrich-Hertz-Strasse, D-7730 Villingen-Schwenningen
(DE)

(72) Erfinder: Kelch, Heinz, Holzwiese 28,
D-7744 Königsfeld 5 (DE)

(74) Vertreter: Passarge, Karin, c/o Kienzle Apparate GmbH
Prinz-Eugen-Strasse Postfach 1640,
D-7730 Villingen-Schwenningen (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Die Erfindung betrifft eine Anordnung zum Kühlen von in einem geschlossenen, über eine Saugleitung mit dem Kraftstofftank in Verbindung stehenden Einspritzkreislauf eines Dieselmotor-Betriebssystems umlaufenden Kraftstoff, bei welchem dem Einspritzkreislauf ein Wärmetauscher zugeordnet ist und als Kühlfluid der im Kraftstofftank befindliche Kraftstoff dient.

Beim Betrieb eines Dieselmotors, der im folgenden als bekannt vorausgesetzt werden darf, wird durch die Kraftstoff-Förderpumpe wesentlich mehr Kraftstoff gefördert, als von der Einspritzpumpe abgegeben, d.h. für die Verbrennung gebraucht wird. Dabei fliesst der geförderte Kraftstoffüberschuss, der unter anderem der Kühlung der Einspritzpumpe dient, in den Kraftstofftank zurück.

Eine Kraftstoffverbrauchsmessung wäre bei diesem allgemein üblichen und relativ einfachen Betriebssystem beispielsweise dadurch möglich, dass sowohl im Vorlauf zur Einspritzpumpe als auch im Rücklauf von der Einspritzpumpe jeweils ein vorzugsweise gleichartiges Mengenmessgerät eingeschaltet und über eine geeignete Differenzbildung der gemessenen Mengenwerte der absolute Verbrauch ermittelt wird.

Die an sich bekannten Probleme dieser Messmethode, nämlich der zweifache Messaufwand und die Fehleraddition bei der Messwertbildung, zwingen zu einer anderen Messmethode mit lediglich einem Mengenmessgerät und einem Betriebssystem, das einen geschlossenen, im folgenden als Einspritzkreislauf bezeichneten Kraftstoff-Kreislauf vorsieht, der von der Kraftstoff-Förderpumpe in Umlauf gehalten wird und in dem lediglich die von der Einspritzpumpe «verbrauchte» Kraftstoffmenge über eine offene, in geeigneter Weise mit dem Einspritzkreislauf gekoppelte Saugleitung, in der in diesem Falle auch das Mengenmessgerät eingeschaltet ist, aus dem Kraftstofftank nachgesaugt wird.

Bei einem solchen Betriebssystem erwärmt sich der im Einspritzkreislauf umlaufende Kraftstoff erheblich, so dass – abgesehen davon, dass ein mit erwärmtem Kraftstoff betriebener Dieselmotor an Effizienz zu verlieren scheint, in Wirklichkeit jedoch die Leistung des Motors abfällt, weil der eingespritzte Kraftstoff nicht gewichtjustiert sondern bei gleichem eingespritztem Volumen in erwärmtem Zustand weniger Energie liefert – die Kühlfunktion des Einspritzkreislaufs für die Einspritzpumpe verloren geht.

Es wurde daher schon versucht, den Einspritzkreislauf durch den Kraftstofftank bzw. durch einen im Kraftstofftank befindlichen Kühlkörper zu leiten mit dem Nebeneffekt, dass der Kraftstoff im Kraftstofftank erwärmt wird und so das Mengenmessgerät, was in verschiedener Hinsicht nicht unvorteilhaft ist, beispielsweise um die Parafinbildung in dem dem Mengenmessgerät vorgeschalteten Kraftstofffilter herabzusetzen, von erwärmtem Kraftstoff durchströmt wird (vrgl. DE-U-7 925 973 und US-A-3 973 536).

Das Anbringen eines derartigen Kühlkörpers, der im einfachsten Falle aus einigen im Kraftstofftank liegenden Schlauchwindungen bestehen kann, sowie dessen lecksicheres Ankoppeln an den Einspritzkreislauf bietet insbesondere beim Nachrüsten eines Fahrzeuges, falls nicht bereits bei der Herstellung des Kraftstofftanks entsprechende Vorkehrungen getroffen worden sind, um die erforderlichen Verbindungsmittel zwischen dem Kühlkörper und dem Einspritzkreislauf am Kraftstofftank befestigen zu können, erhebliche und je nach Fahrzeugtyp auch unterschiedliche Schwierigkeiten.

Um diese Schwierigkeiten zu verringern, wurde schon vorgeschlagen, dass die Mittel zum Einführen des Einspritzkreislaufs in den Kraftstofftank und zum Verbinden des im Kraftstofftank befestigten Kühlkörpers mit dem Einspritzkreislauf am Tankstutzen bzw. an einem mit dem Tankstutzen verbindbaren Verlängerungsstück angeordnet sein sollen. Hiermit hätten zwar Bohr- und Montagearbeitsgänge am Kraftstofftank vermieden werden können, die Vielzahl der Tanktypen und Tankstutzenausbildungen stellen diese Lösung jedoch ernsthaft in Frage.

Auch ist die Kühlwirkung, wenn der Kühlkörper im Kraftstofftank angeordnet wird, nicht befriedigend, weil einerseits infolge der schwankenden Tankfüllung die Wärmeübernahme durch den Tankinhalt nur ungleichmässig erfolgen kann, andererseits infolge ungenügender Durchmischung schlechter thermischer Leitung der relativ grossvolumigen Kraftstoffmasse sowie ungenügender Abstrahlung des Kraftstofftanks, insgesamt also infolge einer relativ trägen Wärmeabgabe, eine zu grosse Aufheizung das Tankinhaltes erfolgt. Ausserdem ist auch der Tankraum spürbar verringert, wenn ein hinreichend wirksamer Kühlkörper im Kraftstofftank angebracht werden würde.

Es wurde daher schon vorgeschlagen, den Einspritzkreislauf durch einen getrennten, speziell ausgebildeten Kühltank hindurchzuführen oder in einen solchen, der in diesem Falle gleichzeitig als Gasabscheider dienen kann, einzuleiten. Jedoch ist in beiden Fällen die Kühlwirkung mangelhaft, weil, wie bereits oben erwähnt, die Wärmeabgabe aus einem derartigen Tank recht träge erfolgt. Auch geht bei dieser Lösung, abgesehen von dem bei Verwendung eines solchen Kühltanks sich ergebenden Raum- und Anordnungsproblemen, der Vorteil, der sich ergibt, wenn dem Mengenmesser erwärmter Kraftstoff zugeführt wird, verloren.

Ziel der vorliegenden Erfindung war es daher, für das genannte Betriebssystem eines Dieselmotors eine Kühlanordnung zu schaffen, deren Kühlwirkung gegenüber den bekannten Anordnungen erheblich verbessert ist, die ausserdem derart ausgebildet ist, dass sie weitgehend unabhängig vom Fahrzeugtyp einbaufähig ist, sich somit auch für einen nachträglichen Einbau eignet und sich mit einem Minimum an Raumbedarf und Montageaufwand anordnen lässt.

Die Lösung dieser Aufgabe sieht vor, dass zwischen dem Wärmetauscher und dem Kraftstofftank ein vom Einspritzkreislauf fluidisch unabhängiger und aus dem Kraftstofftank von einer zusätzlichen Förderpumpe gespeister Kühlkreislauf vorgesehen ist.

Ein bevorzugtes Ausführungsbeispiel ist dadurch gekennzeichnet, dass der Wärmeaustauscher derart ausgebildet ist, dass in ein erstes Rohr ein zweites Rohr eingefügt ist, wobei der Aussendurchmesser des vorzugsweise dem Kühlkreislauf zugeordneten Innenrohres und der Innendurchmesser des vorzugsweise dem Einspritzkreislauf zugeordneten Aussenrohres so weit voneinander abweichen, dass ein für den Kraftstofffluss ausreichender Zwischenraum gegeben ist und dass die beiden aus einem hochwärmeleitfähigen Material bestehenden Rohre gemeinsam zu einer Spule geformt sind. Diese Merkmale sind an sich aus der CH-A-440 784 bekannt.

Die durch die Erfindung erzielbare verbesserte Kühlwirkung ist in erster Linie durch den engen thermischen Kontakt zwischen dem Einspritzkreislauf und dem Kühlkreislauf sowie dem stetigen Abtransport des erwärmten Kraftstoffs aus dem Wärmeaustauscher bedingt. Ausserdem macht sich neben der intensiven Durchmischung im Kraftstofftank, insbesondere bei dem bevorzugten Ausführungsbeispiel, die infolge der grossflächigen Bauweise des Wärmeaustauschers und des nach aussen gelegten Einspritzkreislaufs erzielbare Wärmeabstrahlung sowie die bei geeigneter Anordnung des Wärmeaustauschers im Kraftfahrzeug mögliche Kühlung durch den Fahrtwind vorteilhaft bemerkbar. Das bevorzugte Ausführungsbeispiel, das auch den übrigen aufgabengemäss gestellten Forderungen gerecht wird, stellt darüber hinaus eine besonders fertigungsfreundliche Variante dar, die weitgehend beliebig am Kraftfahrzeug angebracht werden kann, insbesondere jedoch dort angebracht werden kann, wo sie nicht den hohen mechanischen Anforderungen eines am Kraftfahrzeug aussen liegenden Aggregates genügen muss.

Im folgenden sei die Erfindung anhand der beigefügten Zeichnungen näher erläutert. Es zeigen:

Fig. 1 eine vereinfachte schematische Darstellung eines der gewählten Messmethode angepassten Betriebssystems eines Dieselmotors,

Fig. 2 eine erste Ansicht der bevorzugten Ausführungsvariante des erfindungsgemässen Wärmeaustauschers,

Fig. 3 eine weitere teilweise Ansicht der bevorzugten Ausführungsvariante.

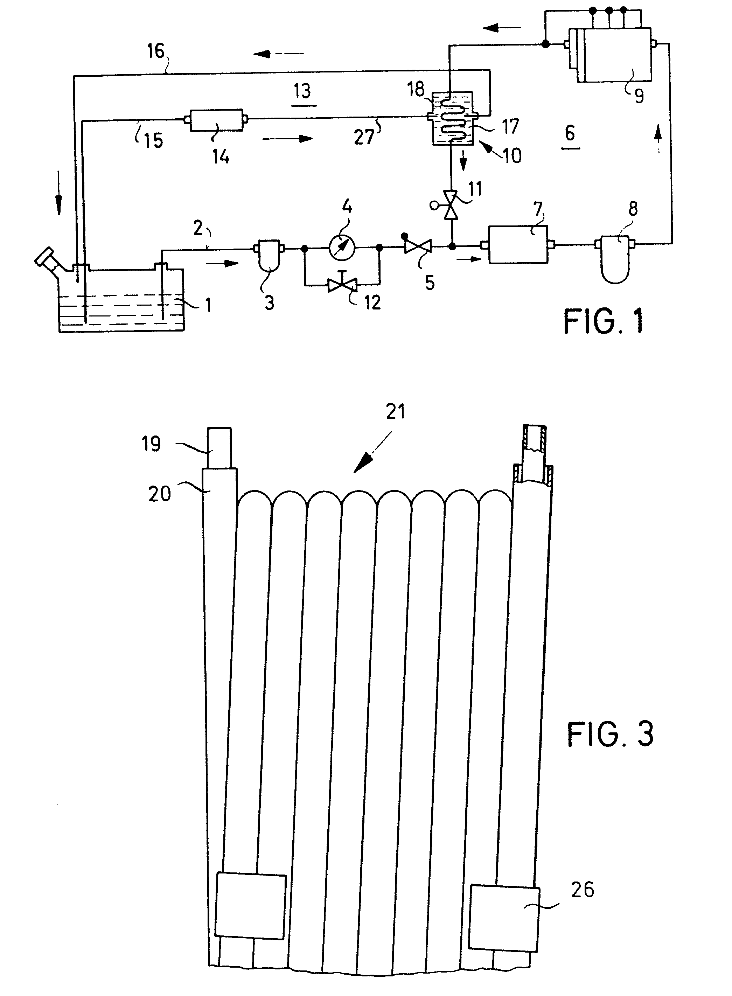

Die schematisierte Darstellung Fig. 1 zeigt im einzelnen einen Kraftstofftank 1, eine tankseitig offene Saugleitung 2, in der ein Vorfilter 3, ein Mengenmessgerät 4 und ein Rückschlagventil 5 eingeschaltet sind, sowie einen als Einspritzkreislauf bezeichneten, geschlossenen Kraftstoffkreislauf 6, in dem in bekannter Weise eine bestimmte Kraftstoffmenge – ausgehend von der Kraftstoff-Förderpumpe 7 über ein Hauptfilter 8, die Einspritzpumpe 9, einen Wärmeaustauscher 10 sowie ein Wiedereinspeiseventil 11 – in Umlauf gehalten wird. Ein dem Mengenmessgerät 4 zugeordneter Bypass 12 dient dessen Überbrückung in Störfällen. Ein weiterer, als Kühlkreislauf bezeichneter Kraftstoffkreislauf 13 wird von einer zusätzlichen Förderpumpe 14 unterhalten. Dieser Kühlkreislauf 13 steht einerseits im Wärmeaustauscher 10 in engem thermischen Kontakt mit dem Einspritzkreislauf 6, andererseits über eine Saugleitung 15 und eine Rückleitung 16 in Verbindung mit dem Kraftstofftank 1, so dass der Wärmeaustauscher 10, der in dem in Fig. 1 dargestellten Beispiel als ein dem Kühlkreislauf 13 zugeordneter, geschlossener Behälter 17 mit einem dem Einspritzkreislauf 6 zugeordneten Kühlkörper 18 ausgebildet ist, stets von kühlem Kraftstoff aus dem Kraftstofftank durchströmt und somit ein Wärmeabtransport, d.h. eine wirkungsvolle Kühlung gewährleistet ist.

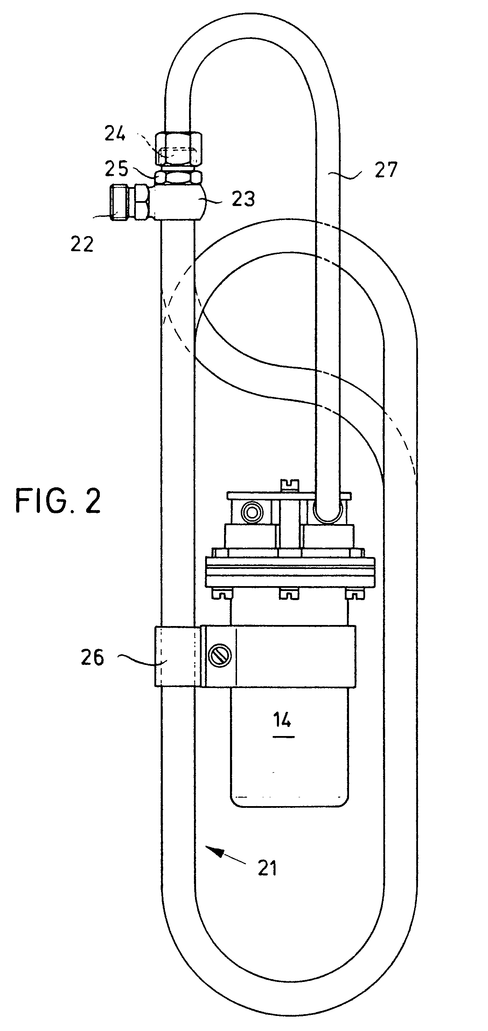

Wie aus den Fig. 2 und 3 ersichtlich ist, findet bei dem bereits genannten bevorzugten Ausführungsbeispiel sowohl für den Kühlkörper als auch für den Behälter Rohrmaterial, vorzugsweise Kupferrohrmaterial Verwendung, wobei ein erstes Rohr 19 kleineren Durchmessers in einem zweiten Rohr 20 liegt und beide Rohre 19, 20 gemeinsam zu einer Spule 21 mit flachovalem Querschnitt geformt sind. Dabei sind der Aussendurchmesser des Innenrohres 19 (z.B. 10 mm) und der Innendurchmesser des Aussenrohres 20 (z.B. 13 mm) derart gewählt, dass ein für den Kraftstofffluss ausreichender Zwischenraum gegeben ist. Mit den Rohrenden sind jeweils Anschlussmittel für die anzuschliessenden Leitungsteile des Einspritzkreislaufs 6 und des Kühlkreislaufs 13 verbunden, und zwar sind, wie Fig. 2 zeigt, am Aussenrohr 20 mit Gewinden 22 versehene Hohlringe 23 und am Innenrohr 19 ebenfalls mit Gewinden 24 ausgestattete Hohlschrauben 25 befestigt und miteinander flüssigkeitsdicht verbunden. Die den Kühlkreislauf 13 betreibende Förderpumpe 14 ist, wie Fig. 2 ferner zeigt, mittels geeigneter Haltemittel 26 derart an der aus den Rohren 19 und 20 geformten Spule 21 befestigt, dass sie sich innerhalb des von den Rohrwindungen umschlossenen Raumes befindet, somit dieser Raum genutzt und eine funktionsfertige Baugruppe geschaffen ist. Mit 27 ist ein der Komplettierung dieser Baugruppe dienender, vorzugsweise flexibler Leitungsteil zwischen der Pumpe 14 und dem Wärmeaustauscher 10 bezeichnet.

Diese besonders fertigungsgünstige Ausführungsvariante eines Wärmeaustauschers wird im Gegensatz zu der in Fig. 1 gezeigten prinzipiellen Lösung vorzugsweise derart angeschlossen, dass das Innenrohr 10 im Kühlkreislauf 13 und das Aussenrohr 20 im Einspritzkreislauf 6 liegen, so dass Fahrtwind und Abstrahlung zusätzlich kühlend wirksam sein können.

**Patentansprüche**

1. Anordnung zum Kühlen von in einem geschlossenen, über eine Saugleitung (2) mit dem Kraftstofftank (1) in Verbindung stehenden Einspritzkreislauf (6) eines Dieselmotor-Betriebssy-

stems umlaufenden Kraftstoff, bei welchem dem Einspritzkreislauf (6) ein Wärmetauscher (10) zugeordnet ist und als Kühlfluid der im Kraftstofftank (1) befindliche Kraftstoff dient, dadurch gekennzeichnet, dass zwischen dem Wärmetauscher (10) und dem Kraftstofftank (1) ein vom Einspritzkreislauf (6) fluidisch unabhängiger und von einer zusätzlichen Förderpumpe (14) aus dem Kraftstofftank (1) gespeister Kühlkreislauf (13) vorgesehen ist.

2. Anordnung nach Anspruch 1, dadurch gekennzeichnet, dass der Wärmeaustauscher (10) derart ausgebildet ist, dass in ein erstes Rohr ein zweites Rohr eingefügt ist, wobei der Aussendurchmesser des vorzugsweise dem Kühlkreislauf (13) zugeordneten Innerohres (19) und der Innendurchmesser des vorzugsweise dem Einspritzkreislauf (6) zugeordneten Aussenrohres (20) so weit voneinander abweichen, dass ein für den Kraftstofffluss ausreichender Zwischenraum gegeben ist und dass die beiden aus einem hochwärmeleitfähigen Material bestehenden Rohre (19, 20) gemeinsam zu einer Spule (21) geformt sind.

3. Anordnung nach Anspruch 1 und 2, dadurch gekennzeichnet, dass die Spule (21) vorzugsweise eine flachovale Querschnittform aufweist und dass der Spule (21) Haltemittel (26) zugeordnet sind, die eine Anordnung der den Kühlkreislauf (13) betreibenden Förderpumpe (14) innerhalb des von den Rohrwindungen umschlossenen Raumes gestatten.

### Claims

1. Device for cooling fuel circulating in a closed circuit in connection with the injection circuit (6) of a diesel motor operating system including a suction pipe (2) connected to the fuel tank (1) in which a heat exchange device (10) is attributed to the injection circuit (6) the fuel remaining in the fuel tank serving as a cooling fluid, characterized in that between the heat exchange device (10) and the fuel tank (1) there is a fluidically independent cooling circuit (13) fed from an additional delivery pump (14) out of the fuel tank (1).

2. Device according to Claim 1, characterized in that the heat exchange device (10) is of such shape that in a first tube (20) there is a second tube (19) the peripheral diameter of the internal tube (19) being preferably attributed to the cooling circuit (13) and the internal diameter of the external tube

(20) being preferably attributed to the injection circuit (6) deviate so much from each other that a sufficient space is provided for the fuel flow and that the two tubes (19 and 20) consist of strongly heat conveying material and are formed commonly as a spool (21).

3. Device according to Claim 1 and 2, characterized in that the spool (21) is preferably of a flat, oval section and that bearing means (26) are attributed to the spool (21) which allow for the arrangement of the delivery pump (14) for the cooling circuit (13) within the space surrounded by the tube windings.

### Revendications

1. Dispositif pour le refroidissement de carburant circulant dans un circuit d'injection (6) d'un système d'exploitation d'un moteur diesel relié, par l'intermédiaire d'une conduite d'aspiration (2), au réservoir de carburant (1), dans lequel un échangeur de chaleur (10) est associé audit circuit d'injection (6) et où le carburant dans le réservoir de carburant (1) sert de fluide de refroidissement, caractérisé par le fait qu'un circuit de refroidissement (13) indépendant, au point de vue du fluide, du circuit d'injection (6) est alimenté à partir du réservoir de carburant (1) par une pompe d'alimentation supplémentaire (14) et prévu entre l'échangeur de chaleur (10) et ledit réservoir de carburant (1).

2. Dispositif selon la revendication 1, caractérisé par le fait que l'échangeur de chaleur (10) est réalisé de telle sorte que dans un premier tube est inséré un deuxième tube, le diamètre extérieur du tube intérieur (19) associé, de préférence, au circuit de refroidissement (13) et le diamètre intérieur du tube extérieur (20) associé, de préférence, au circuit d'injection (6) variant assez largement l'un de l'autre pour ménager un interstice suffisant pour la circulation du carburant et que les deux tubes (19, 20) constitués d'un matériau hautement thermoconductible forment conjointement une bobine (21).

3. Dispositif selon l'une quelconque des revendications 1 et 2, caractérisé par le fait que la bobine (21) présente, de préférence, une forme de section ovale aplatie et qu'à la bobine (21) sont associés des moyens de fixation (26) qui permettent de disposer la pompe d'alimentation (14) desservant le circuit de refroidissement (13) à l'intérieur de l'espace entouré des spires tubulaires.

0 059 303

FIG. 1

FIG. 3

FIG. 2